(19) Europäisches Patentamt

European Patent Office

Office européen des brevets

(11) **EP 0 762 250 B1**

(12) **EUROPÄISCHE PATENTSCHRIFT**

(45) Veröffentlichungstag und Bekanntmachung des Hinweises auf die Patenterteilung:
**22.09.1999 Patentblatt 1999/38**

(51) Int Cl.⁶: **G05B 19/4103**

(21) Anmeldenummer: **96111911.2**

(22) Anmeldetag: **24.07.1996**

(54) **Verfahren zur Steuerung von Koordinatenmessgeräten**

Controlling method for a coordinate measuring device

Procédé de commande d'un appareil de mesure de coordonnées

(84) Benannte Vertragsstaaten:
**DE FR GB IT**

(30) Priorität: **11.08.1995 DE 19529547**

(43) Veröffentlichungstag der Anmeldung:
**12.03.1997 Patentblatt 1997/11**

(73) Patentinhaber:
- **Carl Zeiss**
  **89518 Heidenheim (Brenz) (DE)**
  Benannte Vertragsstaaten:
  **DE FR IT**
- **Carl-Zeiss-Stiftung trading as Carl Zeiss**
  **89518 Heidenheim (Brenz) (DE)**
  Benannte Vertragsstaaten:
  **GB**

(72) Erfinder: **Staaden, Ulrich**
**73431 Aalen (DE)**

(56) Entgegenhaltungen:
**EP-A- 0 417 337**    **DE-A- 3 908 844**

**Beschreibung**

Die Erfindung betrifft ein Verfahren zur Steuerung von Koordinatenmeßgeräten, bei dem der Tastkopf des Koordinatenmeßgeräts nach Solldaten gesteuert verfahren wird.

Ein solches Verfahren ist beispielsweise in der DE-PS 42 12 455 beschrieben. Bei diesem bekannten Verfahren werden die Geometriedaten von Geometrieelementen des Werkstücks von einem Rechner an die Steuerung des Koordinatenmeßgeräts übergeben, dort anschließend in das Maschinenkoordinatensystem transformiert und anschließend an einen Stützpunktgenerator in der Steuerung gegeben, der die Stützpunkte generiert, auf denen der Tastkopf des Koordinatenmeßgeräts dann gesteuert verfahren wird. Außerdem wird die Sollgeschwindigkeit, mit der die Werkstückoberfläche später abgetastet werden soll, als separate Information von dem Rechner an die Steuerung übergeben.

Dieses Vorgehen ist für einfache geometrische Elemente, die im wesentlichen mit einer einzigen vorgegebenen Geschwindigkeit abgefahren werden sollen, zweckmäßig. Schwierig wird es jedoch dann, wenn kompliziertere Werkstück-Geometrien abgefahren werden müssen und sich dabei die Abtastgeschwindigkeit laufend ändert, beispielsweise aufgrund wechselnder Krümmungen der Werkstückoberfläche. In einem solchen Falle ist es relativ aufwendig, den Geschwindigkeits-Sollwert dauernd neu an die Steuerung des Koordinatenmeßgeräts zu übertragen und in die Regelung einzubeziehen.

Die EP 0 417 337 A1 zeigt ein Verfahren zum Betrieb einer numerisch gesteuerten Werkzeugmaschine. Hierbei werden in unterschiedlichen Speichern, die den Verfahrachsen der Werkzeugmaschine zugeordnet sind, Splines zwischen unterschiedlichen abzufahrenden Stützpunkten berechnet, wobei die Splines in Abhängigkeit von einem Bahnlängenparameter S definiert sind. Die Steuerung der Werkzeugmaschine erfolgt dann durch fortlaufendes inkrementieren des Bahnlängenparameters S, wobei in Abhängigkeit von der Größe des Bahnlängenparameters S dann aus den in den Speichern gespeicherten Splines die Verfahrwege in den einzelenen Achsen bestimmt werden.

Es ist deshalb die Aufgabe der vorliegenden Erfindung ein Verfahren zur Steuerung von Koordinatenmeßgeräten zu schaffen, mit dessen Hilfe die Information über das Geschwindigkeitsprofil der Abtastbewegung möglichst schnell und einfach an die Steuerung übergeben und dort verarbeitet werden kann.

Diese Aufgabe wird mit den im Kennzeichen des Anspruchs 1 angegebenen Maßnahmen dadurch gelöst, daß Geometriedaten der Werkstückoberfläche aufbereitet werden, indem daraus Steuerdaten in Form von Punktfolgen generiert werden, wobei die aufbereiteten Punkte von der Steuerung in einem festen Zeittakt einzeln abgefahren werden und damit die Abstände bzw. die gegenseitigen Lagen der Punkte zueinander die Information über den gewünschten Verlauf der Geschwindigkeit (Geschwindigkeitsprofil) und der Beschleunigung (Beschleunigungsprofil) enthalten, mit dem das Koordinatenmeßgerät den Tastkopf verfährt und der Abstand der Punkte stets kleiner als ein vorgegebener erster Wert und die erste Ableitung der Punktabstände an jeder Stelle kleiner als ein vorgegebener zweiter Wert ist.

Bei dem erfindungsgemäßen Verfahren ist die Information über den Verlauf der Abtastgeschwindigkeit bereits in einer Folge von Punkten enthalten, die dann anschließend von der Steuerung nur noch in einem festen Zeittakt einzeln abgefahren werden müssen. Hierdurch wird der steuerungstechnische Aufwand verringert, der anderenfalls betrieben werden müßte, um die Geschwindigkeitsinformation separat zu den Geometriedaten zu verarbeiten. Die Steuerung kann deshalb auch schneller arbeiten.

Es ist zweckmäßig, die Steuerdaten im Rechner des Koordinatenmeßgeräts entsprechend aufzubereiten und blockweise an die Steuerung zu übergeben. Das hat insbesondere dann, wenn komplizierte Geometrien mit sehr großen Punktmengen abzufahren sind, den Vorteil, daß die Daten bereits vor dem Abtasten der Werkstückoberfläche Off-Line auf dem Rechner des Koordinatenmeßgeräts aufbereitet werden können, sodaß der anschließende Scanning-Vorgang durch diese Berechnungen dann nicht mehr belastet wird.

Vorteilhaft werden die Abstände der Punkte so gewählt, daß sich bei zeitgleichem Fortschreiten von Punkt zu Punkt ein stoß- und ruckfreier Bewegungsablauf ohne Sprünge im Geschwindigkeits- bzw. im Beschleunigungsprofil des Koordinatenmeßgeräts ergibt. Ein derartiges "weiches" Fahren vermeidet Schwingungen im Maschinenaufbau und trägt damit zu einer Erhöhung der Meßgenauigkeit bei.

Hierbei werden die Abstände zwischen den Punkten der Punktfolge der Steuerdaten so gewählt, daß das Geschwindigkeitsprofil eine stetig differenzierbare Funktion der Zeit ist, vorzugsweise ein Polynom dritten Grades darstellt.

Im Hinblick auf möglichst kurze Meßzeiten ist es weiterhin zweckmäßig, das Geschwindigkeitsprofil aus Abschnitten zusammenzusetzen, die einerseits einem Polynom höherer Ordnung entsprechen und andererseits einem konstanten Wert entsprechen, nämlich vorzugsweise der Maximalgeschwindigkeit des Koordinatenmeßgeräts.

Weitere Vorteile der Erfindung ergeben sich aus der nachfolgenden Beschreibung eines Ausführungsbeispiels anhand der Figuren 1-5 der beigefügten Zeichnungen.

Figur 1                 ist eine einfache Prinzipskizze, in der die wesentlichen Komponenten einer nach dem erfindungsgemäßen Verfahren arbeitenden Koordinatenmeßeinrichtung dargestellt sind;

Figur 2　　　　　ist eine Skizze, die den Verlauf einer Abtastbahn zeigt, auf der sich der Taster (10) des KMG aus Fig. 1 bewegen soll;

Figur 3 und Figur 4　　　sind Diagramme, in denen der zurückgelegte Weg, das Beschleunigungsprofil und das Geschwindigkeitsprofil für ein nach dem erfindungsgemäßen Verfahren gesteuertes Koordinatenmeßgerät beispielhaft dargestellt sind;

Figur 5　　　　　ist ein Flußdiagramm, das die auf dem Rechner des Koordinatenmeßgeräts beim Aufbereiten der Steuerdaten ablaufenden Programmschritte zeigt.

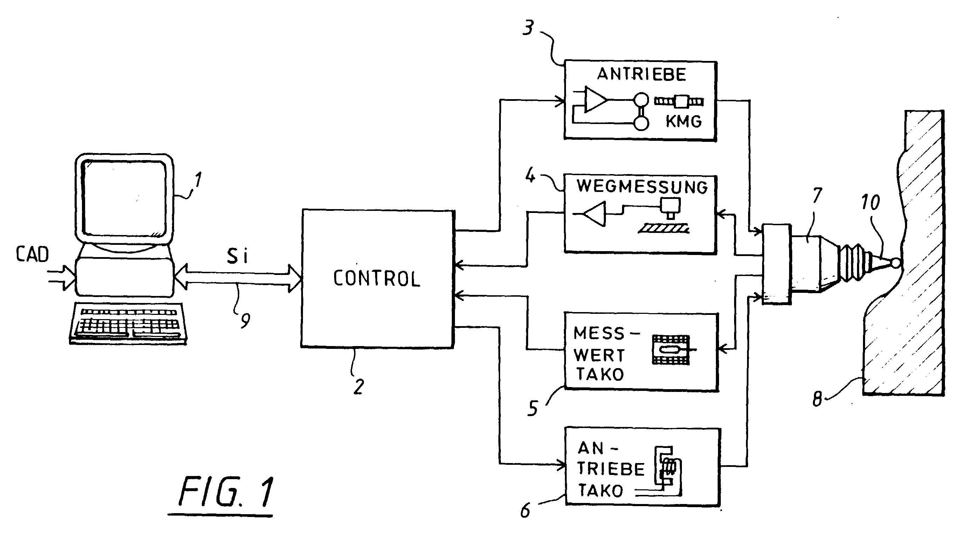

In Figur 1 ist mit (1) der Rechner des Koordinatenmeßgeräts bezeichnet, der die wie noch nachstehend beschrieben wird, aufbereiteten Steuerdaten über eine Datenleitung (9) an die Steuerung (2) des Koordinatenmeßgeräts übergibt. Die Steuerung (2) ist mit den Antrieben (3) der Meßschlitten des Koordinatenmeßgeräts verbunden, von denen der Tastkopf (7) entsprechend den übergebenen Daten entlang der Oberfläche des Werkstücks (8) verfahren wird. Ebenfalls verbunden ist die Steuerung mit den Antrieben (6) im Innern des Tastkopfs, über die sich der Taststift (10) des Tastkopfs (7) auslenken läßt bzw. mit deren Hilfe die auf das Werkstück (8) ausgeübte Meßkraft eingestellt werden kann. Die Meßsysteme, von denen die Auslenkung des Taststifts (10) gemessen wird, sind mit (5) bezeichnet und der mit dem Bezugszeichen (4) versehene Block deutet die Wegmeßsysteme, d.h. Maßstäbe und Encoder an, über die die Position des Tastkopfs (7) an die Steuerung (2) rückgemeldet wird.

Eine ausführlichere Beschreibung einer solchen Steuerung findet sich in der eingangs genannten DE-PS 42 12 455 sowie in der korrespondierenden US-PS 5,471,406, auf die an dieser Stelle ausdrücklich Bezug genommen wird.

Dem Rechner (1) sind nun beispielsweise von einer CAD-Anlage Geometriedaten übergeben worden, die die Sollform der Oberfläche des zu prüfenden Werkstücks (8) beschreiben. Die CAD-Daten sind in der Regel Punktdaten, wobei zu jedem Punkt außerdem eine Information über die Lage der Fläche an diesem Punkt in Form eines Normalenvektors beigegeben ist.

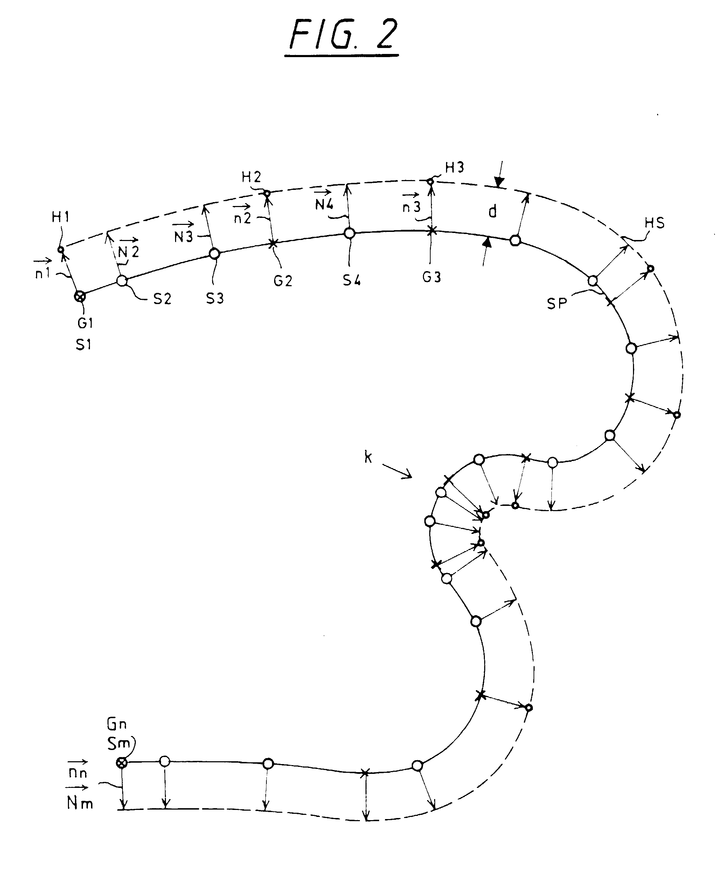

In Figur 2 ist beispielhaft ein solcher Satz von Geometriedaten illustriert. Es sind dies die mit (G1, G2, G3 usw.) bezeichneten Kreuze, die entsprechend den Koordinaten (x, y, z) dieser Punkte eingezeichnet wurden, zusammen mit den zugehörigen Normalenvektoren ($\vec{n1}$, $\vec{n2}$, $\vec{n3}$ usw.). Zwischen diesen Punkten ist der Verlauf der Kontur des Werkstücks unbekannt.

Die erhaltenen Daten bereitet nun der Rechner (1) für die Steuerung (2) in folgender Weise auf:

Zuerst wird durch die Punkte (G1-Gn) ein Spline (SP), beispielsweise ein Bezier-Spline gelegt. Hierbei handelt es sich um Funktionen dritten Grades, für die gilt, daß die Funktionswerte und ihre ersten und zweiten Ableitungen an den Stützstellen übereinstimmen. Außerdem sollen die Enden des Splines keine Krümmung aufweisen. Ein solcher Spline verbindet zwar die Punkte (G1-Gn) der Geometriedaten, folgt aber natürlich nicht exakt der Kontur des Werkstücks, da diese wie bereits erwähnt zwischen den Punkten ja nicht bekannt ist.

Anschließend werden im Rechner (1) die Punkte (S1-Sm) generiert, die dann Solldaten darstellen, anhand derer die Steuerung (2) den Tastkopf (7) auf seiner Bahn entlang der Werkstückoberfläche steuert. Dabei wird davon ausgegangen, daß die Steuerung die Punktfolge der Solldaten später so abfährt, daß im festen Maschinentakt von z. B. 10 msec. von einem Punkt zum anderen gefahren wird. Somit läßt sich über den Abstand der Punkte das Beschleunigungsprofil und das Geschwindigkeitsprofil des Koordinatenmeßgeräts vorgeben. Diese Profile werden nun so gewählt, daß das Koordinatenmeßgerät weich, d.h. stoß- und ruckfrei auf der vorgegebenen Bahn fährt. Um das zu erreichen, wird folgendermaßen vorgegangen:

Man geht davon aus, daß sich die Bewegung des Tastkopfs (7) beim Abarbeiten einer Meßaufgabe in drei Bewegungsarten einteilen läßt:

1. eine Beschleunigungsphase,
2. eine gleichförmige Bewegung mit konstanter Geschwindigkeit,
3. und eine Verzögerungsphase.

Um einen stetig differenzierbaren Übergang der Geschwindigkeit von einer Bewegungsart zur anderen zu erreichen und Sprünge im Beschleunigungsprofil und im Geschwindigkeitsprofil zu vermeiden (stoß- und ruckfreier Betrieb), setzt man die Geschwindigkeit als Polynom dritter Ordnung an, so daß gilt

$$v(t) = b_1 t^3 + b_2 t^2 + b_3 t + b_4 \qquad \text{(Gl. 1)}$$

Daraus ergibt sich für die Beschleunigung:

$$a(t) = 3b_1t^2 + 2b_2t + b_3 \qquad \text{(Gl. 2)}$$

Für den Weg x (t) gilt dann

$$x(t) = \tfrac{1}{4}\, b_1t^4 + \tfrac{1}{3}\, b_2t^3 + \tfrac{1}{2}\, b_3t^2 + b_4t + b_5 \qquad \text{(Gl. 3)}$$

Die Koeffizienten für diese Gleichungen ergeben sich aus den Randbedingungen. So ist beim Anfahren aus dem Stillstand der Startpunkt bekannt. In diesem Startpunkt ist außerdem die Geschwindigkeit v = 0. Außerdem dürfen die Beschleunigung (a) und die Geschwindigkeit (v) bestimmte Maximalwerte (amax) und (vmax) nicht überschreiten, die für die Antriebe des Koordinatenmeßgeräts vorgegeben werden.

Setzt man für das Geschwindigkeitsprofil die beschriebene Funktion an, so erlaubt die Metrik ein beliebiges Aneinanderfügen der Bewegungsarten in der Weise, daß der Geschwindigkeitsverlauf immer stetig differenzierbar bleibt, die Bewegung also stoß- und ruckfrei verläuft.

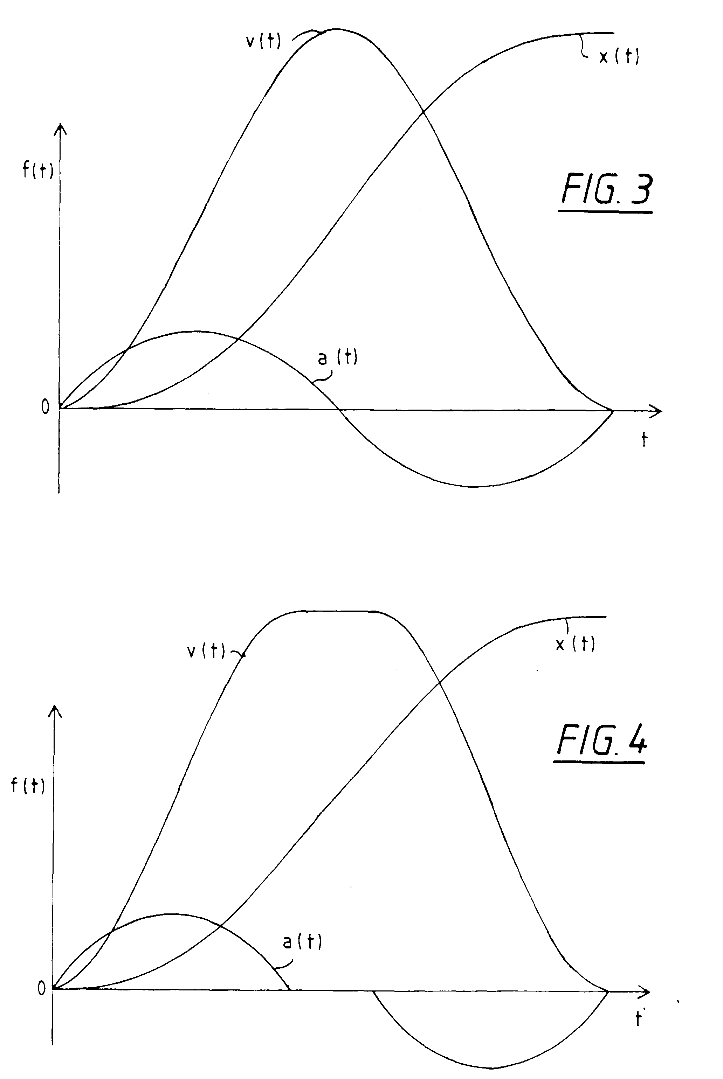

Die Figur 3 stellt den Verlauf der Funktionen x(t), v(t) und a(t) dar, wenn die Bewegung in einem ganz einfachen Falle aus der Beschleunigung vom Stand aus auf einen vorgegebenen Geschwindigkeitswert und anschließend dem Wiederabbremsen in den Stillstand besteht. In Figur 4 ist der Fall dargestellt, daß zwischen der Beschleunigungs- und der Bremsphase eine Bewegungsphase mit gleichförmiger Geschwindigkeit zwischengeschaltet ist. Denn im allgemeinen möchte man, daß das Koordinatenmeßgerät dort, wo möglich, mit maximaler Geschwindigkeit fährt, aber die maximal zulässige Beschleunigung nie überschreitet. Aus Figur 4 ist ersichtlich, daß auch für diesen Fall die Beschleunigung einen stetigen Verlauf ohne Sprünge besitzt.

Würde man jetzt im wesentlichen entlang einer geradlinigen Abtastbahn steuern müssen, so würde man auf dem wie zuvor anhand von Figur 2 erläuterten Spline (SP) die Abstände der Solldaten entsprechend dem Geschwindigkeitsprofil nach Figur 3 oder Figur 4 wählen, d.h. das von der Steuerung zu fahrende Geschwindigkeitsprofil würde über die Punktabstände der Sollpunkte codiert werden.

Bei gekrümmten Bahnen ist der Sachverhalt jedoch nicht so einfach. Denn aufgrund der Krümmung treten beim Durchfahren der Bahn Zentrifugalkräfte senkrecht zur Bahn und somit im wesentlichen parallel zu der Flächennormalen auf die Werkstückoberfläche auf. Die zugehörige Zentrifugalbeschleunigung darf ebenfalls vorgegebene maximale Werte nicht überschreiten. Dies kann nur so sichergestellt werden, indem die Bahngeschwindigkeit abhängig vom Krümmungsradius an der momentanen Position entsprechend limitiert bzw. zurückgenommen wird. Da für die Zentrifugalbeschleunigung gilt

$$az = v^2 / r \qquad \text{(Gl. 4),}$$

gilt für die maximal erlaubte Geschwindigkeit an irgendeiner Stelle i auf dem Spline

$$v(i) = \text{MIN} \left(vmax, \sqrt{azmax \cdot r}\right) \qquad \text{(Gl. 5).}$$

Es ist somit möglich, auch bei gekrümmten Bahnen mit Hilfe der Beziehung nach (5) und den übrigen genannten Nebenbedingungen auf dem Spline (SP) in Figur 2 neue Punkte (S1, S2, ..., Sm) zu generieren, deren Abstände den momentanen jeweiligen optimalen Geschwindigkeitsverlauf codieren. An den Stellen starker Krümmung der zu steuernden Bahn (das ist die durch den Pfeil K angedeutete Stelle) liegen die neu generierten Punkte entsprechend dichter, was bedeutet, daß dort langsamer gefahren werden muß, um die Zentrifugalkräfte gering zu halten.

Es ist nun außerdem noch erforderlich, für die neugenerierten Punkte die jeweiligen Flächennormalen auf die Werkstückkontur zu interpolieren. Hier geht man so vor, daß ein Satz von Hilfspunkten (H1, H2, H3, ..., Hn) aus den Punkten (G1, G2, ..., Gn) generiert wird, für die gilt:

$$H(i) = G(i) + d \cdot \vec{n}(i) \qquad \text{(Gl. 6)}$$

Durch diese Punkte läßt sich wie durch die gestrichelte Linie angedeutet ist, ein Hilfs-Spline (HS) legen. Auf diesem Hilfs-Spline müssen dann auch die Enden der den Punkten (S1 - Sm) zugeordneten neu berechneten Norma-

lenvektoren ($\overrightarrow{N1}$, $\overrightarrow{N2}$, ..., $\overrightarrow{Nm}$) liegen.

Mit den vorstehend beschriebenen Ansätzen und Nebenbedingungen ist der Rechner (1) in der Lage, die Punktfolge der Steuerdaten (S1, ..., Sm) samt den diesen Punkten zugeordneten Normalenvektoren ($\overrightarrow{N1}$ - $\overrightarrow{Nm}$) aus den von z.B. einem CAD-System erhaltenen Geometriedaten (G1-Gn, $\overrightarrow{n1}$-$\overrightarrow{nn}$) zu bestimmen. Die so aufbereiteten Solldaten werden anschließend blockweise beispielsweise in Blöcken von jeweils zehn Punkten in einem durch den Bus (9) bedingten, langsameren Takt von 100 msec. an die Steuerung (2) übergeben und dort wie vorstehend beschrieben abgefahren.

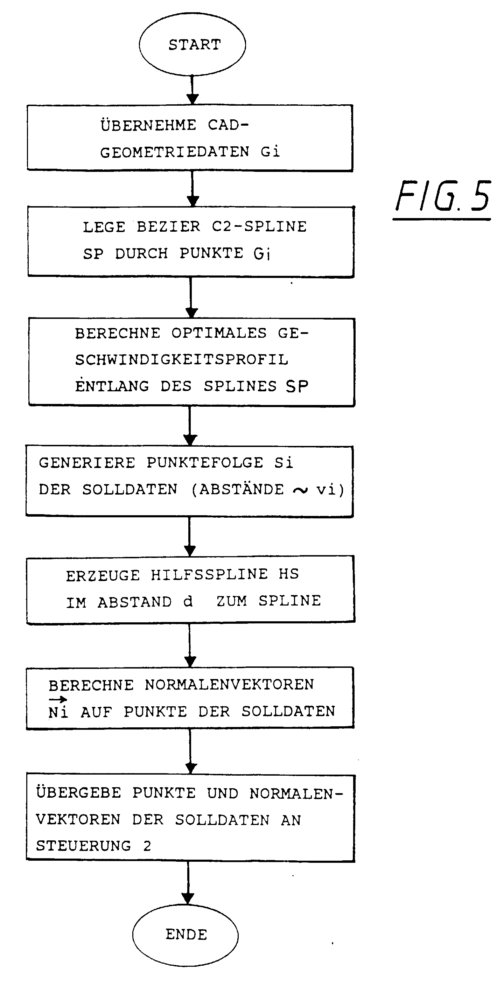

Der vorstehend erläuterte Ablauf ist in dem Flußdiagramm nach Figur 5 nochmals übersichtlich dargestellt. Die Steuerung (2) fährt anschließend in ihrem Zeittakt ($T_1$) von z.B. 10 msec. die übergebenen Punkte einzeln ab, wodurch der in der Punktfolge codierte Bewegungsablauf in die Bewegung des Tastkopfs (7) umgesetzt wird.

## Patentansprüche

1. Verfahren zur Steuerung von Koordinatenmeßgeräten, bei dem der Tastkopf (7) des Koordinatenmeßgeräts nach Solldaten gesteuert verfahren wird, wobei die Geometriedaten (G1-Gn) der zu vermessenden Werkstückoberfläche (8) aufbereitet werden, indem daraus Steuerdaten (S1-Sm) in Form von Puktfolgen generiert werden, dadurch gekennzeichnet, daß die aufbereiteten Punkte (S1-Sm) von der Steuerung in einem festen Zeittakt (T1) einzeln abgefahren werden und damit die Abstände der Punkte (S1-Sm) der Folge zueinander die Information über den gewünschten Verlauf der Geschwindigkeit (V(t)) (Geschwindigkeitsprofil) und der Beschleunigung (a(t)) (Beschleunigungsprofil) enthalten, mit der das Koordinatenmeßgerät den Tastkopf (7) verfährt, und der Abstand der Punkte stets kleiner als ein vorgegebener erster Wert (vmax) und die erste Ableitung der Punktabstände an jeder Stelle kleiner als ein vorgegebener zweiter Wert (amax) ist.

2. Verfahren nach Anspruch 1, wobei die Steuerdaten im Rechner (1) des Koordinatenmeßgeräts aufbereitet werden und blockweise an die Steuerung (2) des Koordinatenmeßgeräts übergeben werden.

3. Verfahren nach Anspruch 1, wobei die Abstände (di) der Punkte (S1-Sm) so gewählt werden, daß sich bei zeitgleichem Fortschreiten von Punkt zu Punkt ein stoß- und ruckfreier Bewegungsverlauf ohne Sprünge im Geschwindigkeitsprofil (v(t)) und ohne Sprünge im Beschleunigungsprofil (a(t)) des Koordinatenmeßgeräts ergibt.

4. Verfahren nach Anspruch 3, wobei die Abstände so gewählt sind, daß das Geschwindigkeitsprofil (v(t)) eine stetig differenzierbare Funktion der Zeit (t) ist.

5. Verfahren nach Anspruch 4, wobei das Geschwindigkeitsprofil (v(t)) ein Polynom dritten Grades darstellt.

6. Verfahren nach Anspruch 5, wobei das Polynom höheren Grades abschnittsweise einen konstanten Wert besitzt, der der Maximalgeschwindigkeit (vmax) des Koordinatenmeßgeräts entspricht.

7. Verfahren nach einem der Ansprüche 1-6, wobei die Abstände (d) der Punkte (S1-Sm) so gewählt sind, daß bei zeitgleichem Fortschreiten von Punkt zu Punkt weder der zulässige Maximalwert der Geschwindigkeit (vmax) des Koordinatenmeßgeräts noch die zulässige maximale Beschleunigung (amax) des Koordinatenmeßgeräts überschritten wird.

8. Verfahren nach Anspruch 7, wobei dann, wenn die Punkte (S1-Sm) auf einer gekrümmten Bahn liegen, die Punktabstände in Fahrtrichtung so gewählt werden, daß die Zentrifugalkräfte bzw. Zentrifugalbeschleunigungen vorgegebene Werte (azmax) nicht überschreiten.

9. Verfahren nach einem der Ansprüche 1-8, wobei die Geometriedaten (G1 - Gn) eine erste Folge von Stützpunkten sind, wobei weiterhin durch die Punkte dieser ersten Punktfolge eine Splinefunktion gelegt wird und anschließend die zweite Punktfolge der Steuerdaten als auf diesem Spline liegende Punkte (S1-Sm) generiert wird.

10. Verfahren nach Anspruch 9, wobei die Geometriedaten CAD-Daten sind, von denen eine Werkstückoberfläche punktweise beschrieben ist und die eine Information ($\overrightarrow{n1}$-$\overrightarrow{nn}$) über die Flächennormale an dem jeweiligen Stütz punkt beinhalten.

## Claims

1. A method for controlling a coordinate measuring apparatus wherein the probe head (7) of the coordinate measuring apparatus is driven in a controlled manner in accordance with desired data and wherein the geometric data (G1 - Gn) of the workpiece surface (8) to be measured are processed by generating control data (S1-Sm) in the form of a sequence of points, characterized by the fact, that the processed points (S1-Sm) are scanned individually by the control at a fixed clock rate (T1), so that the distances between the Points (S1-Sm) of said sequence defining the Information of the desired course of the speed (V(t)) (speed profile) and of the acceleration (a(t)) (acceleration profile) with which the coordinate measuring apparatus moves the probe head (7) and said distances between said points always being less than a pregiven first value (Vmax) and the first derivative of said distances at each position being less than a pregiven second value (amax).

2. The method of claim 1, wherein the control data is processed in the computer of said coordinate measuring apparatus and is transmitted in blocks of data to the control (2) of said coordinate measuring apparatus.

3. The method of claim 1, wherein the distances (di) of the points (S1 to Sm) are so selected that, when advancing at even time intervals from point to point, a jolt-free course of movement results without jumps in the speed profile (v(t)) and without jumps in the acceleration profile (a(t)) of said coordinate measuring apparatus.

4. The method of claim 3, wherein said distances are so selected that said speed profile (v(t)) is a continuously differentiable function of time (t).

5. The method of claim 4, wherein said speed profile (v(t)) defines a polynome of the third order.

6. The method of claim 5, wherein said polynome of higher order has a constant value in segments thereof; and, said constant value corresponds to the maximum speed (vmax) of said coordinate measuring apparatus.

7. The method of claim 1 to 6, wherein the distances (d) of the points (S1 to Sm) are so selected that, when advancing at even time intervals from point to point, neither the permissible maximum value of the speed (vmax) of said coordinate measuring apparatus nor the permissible maximum acceleration (amax) of the coordinate measuring apparatus is exceeded.

8. The method of claim 7, wherein, when said points (S1 to Sm) lie on a curved path, the distances of the points in travel direction are so selected that the centrifugal forces or centrifugal accelerations do not exceed pregiven values (azmax).

9. The method of one of the claims 1 to 8, wherein said geometric data (G1 to Gn) being a first sequence of support points and said method comprising the further steps of laying a spline function through the points of said first sequence of support points; and, then generating the second point sequence of said control data as points (S1 to Sm) lying on said spline.

10. The method of claim 9, wherein said geometric data are CAD data which defines the workpiece surface in a point-by-point manner; and, said CAD data containing information ($\vec{n1}$ to $\vec{nn}$) as to the surface normals at corresponding ones of said support points.

## Revendications

1. Procédé de commande d'appareils de mesure de coordonnées faisant intervenir une commande du déplacement de la tête de mesure (7) de l'appareil de mesure de coordonnées en fonction de données nominales, où les données géométriques (G1-Gn) de la surface de la pièce à usiner (8) sont gérées de manière à en tirer des données de commande (S1-Sn) sous forme de séries de points, caractérisé en ce que les points ainsi générés (S1-Sm) sont relevés un par un par l'unité de commande (2) à une cadence fixe (T1) et que les écarts respectifs des points de la série de points contiennent donc les informations relatives à la variation souhaitée de la vitesse (V(t)) (profil de vitesse) et de l'accélération (a(t)) (profil d'accélération), avec laquelle l'appareil de mesure de coordonnées déplace la tête de palpage (7), la distance d'un point à l'autre étant toujours inférieure à une première valeur prédéterminée (vmax) et la première dérivée des écarts de points devant être partout inférieure à une seconde valeur prédéterminée (amax).

**EP 0 762 250 B1**

**2.** Procédé selon la revendication 1, où les données de commande sont générées dans l'ordinateur (1) de l'appareil de mesure de coordonnées et transmises par blocs à l'unité de commande de l'appareil de mesure de coordonnées.

**3.** Procédé selon la revendication 1, où les écarts (di) entre les points (S1-Sm) sont choisis de manière à assurer, pour un déplacement d'un point à l'autre à des intervalles de temps constants, une variation du mouvement sans chocs ni à-coups et sans discontinuités dans le profil de vitesse (V(t)) et dans le profil d'accélération (a(t)) de l'appareil de mesure de coordonnées.

**4.** Procédé selon la revendication 3, où les écarts sont choisis de manière à ce que le profil de vitesse (V(t)) soit une fonction continûment différenciable du temps (t).

**5.** Procédé selon la revendication 4, où le profil de vitesse (V(t)) représente un polynôme du troisième degré.

**6.** Procédé selon la revendication 5, où le polynôme de degré supérieur présente par endroits une valeur constante qui correspond à la vitesse maximale (vmax) de l'appareil de mesure de coordonnées.

**7.** Procédé selon l'une des revendications 1-6, où les écarts (d) entre les points (S1-Sm) sont choisis de manière à ne dépasser, pour un déplacement d'un point à l'autre à des intervalles de temps constants, ni la vitesse maximale admissible (vmax), ni l'accélération maximale admissible (amax) de l'appareil de mesure de coordonnées.

**8.** Procédé selon la revendication 7, où les écarts séparant des points (S1-Sm) situés sur une trajectoire incurvée sont choisis dans le sens du déplacement, de manière à ce que les forces ou accélérations centrifuges ne dépassent pas des valeurs prédéterminées (azmax).

**9.** Procédé selon l'une des revendications 1-8, où les données géométriques (G1-Gn) constituent une première série de points d'appui, où une fonction spline reliant les points de cette première série de points est construite et où une deuxième série de points entrant dans les données de commande est ensuite générée sous forme de points (S1-Sm) situés sur ledit spline.

**10.** Procédé selon la revendication 9, où les données géométriques sont des données DAO qui décrivent la surface d'une pièce à usiner par des points et qui contiennent des informations (n1-nn) sur la normale à la surface pour chaque point d'appui.

*FIG. 1*

## FIG. 2

_FIG. 3_

_FIG. 4_

START

ÜBERNEHME CAD-
GEOMETRIEDATEN Gi

*FIG. 5*

LEGE BEZIER C2-SPLINE
SP DURCH PUNKTE Gi

BERECHNE OPTIMALES GE-
SCHWINDIGKEITSPROFIL
ENTLANG DES SPLINES SP

GENERIERE PUNKTEFOLGE Si
DER SOLLDATEN (ABSTÄNDE $\sim$ vi)

ERZEUGE HILFSSPLINE HS
IM ABSTAND d ZUM SPLINE

BERECHNE NORMALENVEKTOREN
$\vec{Ni}$ AUF PUNKTE DER SOLLDATEN

ÜBERGEBE PUNKTE UND NORMALEN-
VEKTOREN DER SOLLDATEN AN
STEUERUNG 2

ENDE